Europäisches Patentamt

European Patent Office

Office européen des brevets

(19)

(11) EP 1 403 956 A2

(12) **EUROPEAN PATENT APPLICATION**

(43) Date of publication:
31.03.2004 Bulletin 2004/14

(51) Int Cl.[7]: $H01M\ 8/12$, $H01M\ 4/86$

(21) Application number: 03255962.7

(22) Date of filing: 23.09.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 27.09.2002 JP 2002283289

(71) Applicant: SHINKO ELECTRIC INDUSTRIES CO. LTD.
Nagano-shi, Nagano 380-0921 (JP)

(72) Inventors:
• Horiuchi, Michio, Shinko Electric Ind. Co. Ltd.
Nagano-shi, Nagano 380-0921 (JP)

• Suganuma, Shigeaki,
Shinko Electric Ind. Co. Ltd.
Nagano-shi, Nagano 380-0921 (JP)
• Watanabe, Mise, Shinko Electric Ind. Co. Ltd.
Nagano-shi, Nagano 380-0921 (JP)
• Yamazaki, Shuji, Shinko Electric Ind. Co. Ltd.
Nagano-shi, Nagano 380-0921 (JP)

(74) Representative: Jennings, Guy Kenneth
GILL JENNINGS & EVERY,
Broadgate House,
7 Eldon Street
London EC2M 7LH (GB)

(54) **Fuel battery**

(57) A fuel battery having a high oxygen partial pressure at the fuel electrode side, maintaining conductivity even under conditions where a metal electrode would be oxidized, and maintaining a fuel electrode function, having a cell (16) comprised of an oxygen ion conducting solid electrolyte layer (10) on one surface of which a cathode layer (12) is formed and on the other surface of which an anode layer (14) is formed, supplied with methane or another fuel gas and oxygen or an oxygen-containing gas, and undergoing an oxidation reduction reaction between the gases through the cell (16) whereby an electromotive force is generated, wherein the anode layer (14) is comprised of a fired body having NiO containing Li in solid solution as a main ingredient.

Fig.1

EP 1 403 956 A2

**Description**

The present invention relates to a fuel battery.

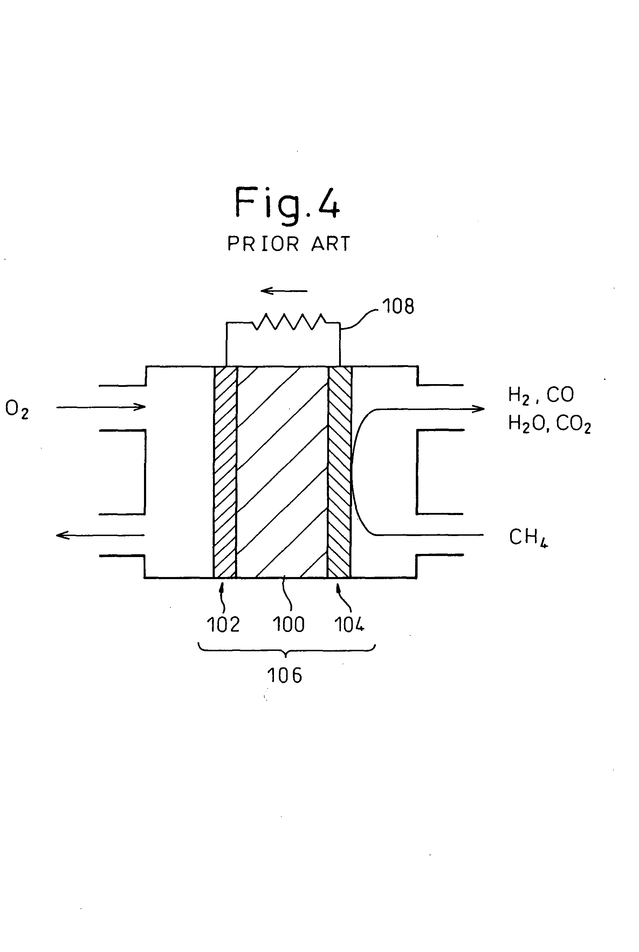

Fuel batteries are currently the subject of much research since they promise higher efficiency power generation compared with thermal power generation. Such a fuel battery, as shown in FIG. 4, is provided with a fuel battery cell 106 comprised of an oxygen ion conducting solid electrolyte layer 100 made of a sintered body comprised of yttrium ($Y_2O_3$)-containing stabilized zirconium oxide, a cathode layer 102 formed on one surface of this solid electrolyte layer 100, and an anode layer 104 formed on the other surface of the solid electrolyte layer 100. The cathode layer 102 side of the fuel battery cell 106 is supplied with oxygen or an oxygen-containing gas. The anode layer 104 side is supplied with methane or another fuel gas. This fuel battery forms separated chambers divided by the cell 106 into a fuel gas supply side chamber and an oxygen or oxygen-containing gas supply side chamber.

The oxygen ($O_2$) supplied to the cathode layer 102 side of the fuel battery cell 106 shown in FIG. 4 is ionized into oxygen ions ($O^{2-}$) at the boundary of the cathode layer 102 and solid electrolyte layer 100. The oxygen ions ($O^{2-}$) are conducted to the anode layer 104 by the solid electrolyte layer 100. The oxygen ions ($O^{2-}$) conducted to the anode layer 104 react with the methane ($CH_4$) supplied to the anode layer 104, whereby water ($H_2O$), carbon dioxide ($CO_2$), hydrogen ($H_2$), and carbon monoxide ($CO$) are produced. At the time of this reaction, the oxygen ions discharge electrons, so a potential difference arises between the cathode layer 102 and the anode layer 104. Therefore, by electrically connecting the cathode layer 102 and anode layer 104 by lead lines 108, the electrons of the anode layer 104 flow through the lead lines 108 in the direction of the cathode layer 102 (arrow direction) and electricity can be taken out from the fuel battery. The operating temperature of the fuel battery shown in FIG. 4 is about 1000°C.

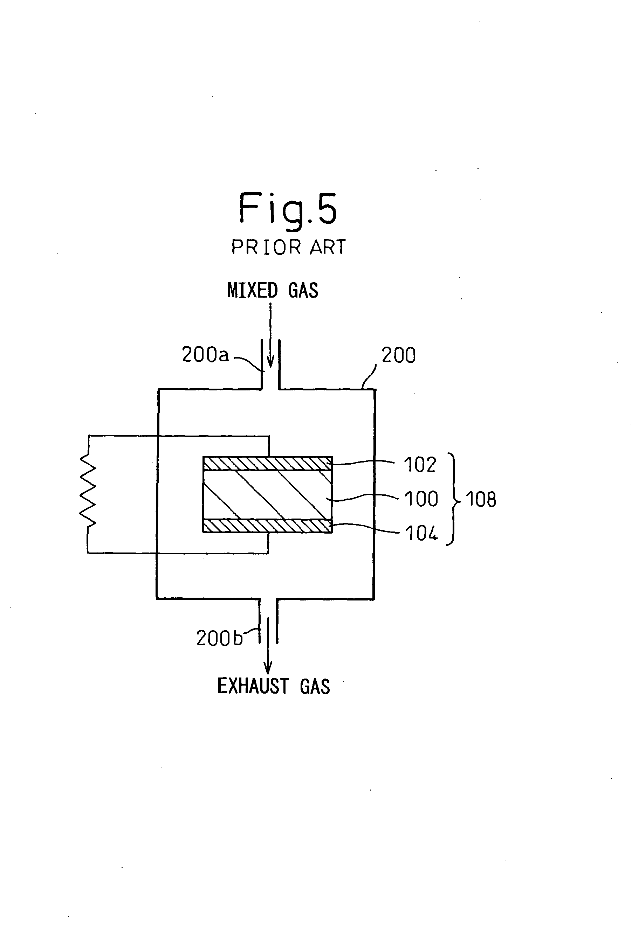

The fuel battery cell 106 shown in FIG. 4, however, is exposed to an oxidizing atmosphere at its cathode layer 102 side and is exposed to a reducing atmosphere at its anode layer 104 side under a high temperature of about 1000°C, so it was difficult to improve the durability of the fuel battery cell 106. On the other hand, T. Hibino et al., *Science,* Vol. 288 (2000), p. 2031 to 2033 reports, as shown in FIG. 5, that even if placing a fuel battery cell 106 comprised of a solid electrolyte layer 100 at the two surfaces of which a cathode layer 102 and anode layer 104 are formed in a mixed fuel gas of methane gas and oxygen mixed together, electromotive force will be generated in the fuel battery cell 106.

By placing a fuel battery cell 106 into a mixed fuel gas Like with the fuel battery shown in FIG. 5, it is possible to make the entire fuel battery cell 106 substantially the same atmosphere and possible to improve the durability compared with the fuel battery cell 106 shown in FIG. 4 where the two surfaces are exposed to different atmospheres. This fuel battery forms a single chamber to which a mixed gas of the fuel gas and oxygen or an oxygen-containing gas is supplied. However, the fuel battery shown in FIG. 5 is supplied with a mixed fuel gas of methane gas and oxygen mixed together under a high temperature of about 1000°C, so the mixed fuel gas is supplied adjusted so that the oxygen concentration becomes lower than the ignition limit so as to avoid the hazard of explosion. Therefore, there is remarkably insufficient oxygen for the methane or other fuel to completely burn, the methane or other fuel carburizes, and the battery performance drops in some cases.

Therefore, the inventors previously developed a fuel battery able to use a mixed fuel gas of methane or another fuel and oxygen and raised in concentration of oxygen to an extent able to prevent explosion of the mixed fuel gas while preventing progress in carburization of the fuel and filed for a patent for the same (Japanese Patent Application No. 2001-281730 (USSN 10/244313)). This fuel battery is a fuel battery comprised of a fuel battery cell housed in a container formed with supply and exhaust ports for mixed fuel gas including methane or another fuel gas and oxygen or an exhaust gas, wherein portions other than the fuel battery cell in the container forming spaces in the container where the mixed fuel gas or exhaust gas flows are filled with a filler and gaps between parts of the filler are of a extent by which even if there is mixed fuel gas in the ignition limit in the spaces, it cannot ignite when driving the fuel battery.

Summarizing the problems to be solved by the invention, in the above single chamber fuel battery, since a mixed fuel gas under the ignition limit is used, complete combustion of the fuel gas is promoted and the battery performance is improved, but there is the difficulty that along with long term use, the nickel or nickel cermet used for the anode layer (fuel electrode) will oxidize. If the nickel oxidizes, not only will the electrode resistance rise and the power generation efficiency drop or generation become impossible, but also the electrode will peel.

Further, there is a similar issue in the case of the above separated chamber fuel battery. That is, with a separated chamber type, the anode layer (fuel electrode) is supplied with fuel gas or moisturized fuel gas and the atmosphere becomes a reducing one, but at the downstream side (near fuel electrode), due to the electrochemical reaction, the partial pressure of the water vapor or carbonic acid gas will rise and, depending on the equilibrium oxygen partial pressure, the atmosphere will become an oxidizing one and the oxidation of the nickel or nickel cermet used for the fuel electrode material will become a problem.

C.E. Baumgartner et al., "Molten Carbonate Fuel Cell Cathode Material Study", *J. Electrochem. Soc.*, 131, 2217-2221 (1984) reports the use of the conductive oxide Li-doped NiO as the cathode of a molten carbonate fuel cell. This cathode catalyzes the following electrode reaction:

$$CO_2+1/2O_2+2e^-\text{->}CO_3{}^{2-}$$

On the other hand, the anode of the present invention has to catalyze the following electrode reaction:

$$H_2+O^{2-}\rightarrow H_2O+2e^-$$

In this way, the cathode and anode completely differ in the electrode reaction covered by the catalytic action, so it is not possible to think of the present invention using the same Li-doped NiO as an anode material from the report of Baumgartner et al. using Li-doped NiO as the cathode material. Rather, a person skilled in the art referring to the report of Baumgartner et al. might even gain the suggestion that Li-doped NiO is unsuitable as an anode material.

An object of the present invention is to provide a fuel battery having a higher oxygen partial pressure at the fuel electrode (anode layer) side and maintaining conductivity and the fuel electrode function even under conditions where the electrode metal would be oxidized.

According to a first aspect of the present invention, there is provided a fuel battery having a cell comprised of an oxygen ion conducting solid electrolyte layer on one surface of which a cathode layer is formed and on the other surface of which an anode layer is formed, supplied with methane gas or another fuel gas and oxygen or an oxygen-containing gas, and causing an oxidation reduction reaction between the gases through the cell so as to generate electromotive power, wherein the anode layer is comprised of a sintered body having, as a main ingredient, NiO containing Li in solid solution. Preferably, the fuel battery forms a separated type divided into a fuel gas supply side chamber and an oxygen or oxygen-containing gas supply side chamber by the cell. Alternatively, it has a chamber in which a cell is arranged so that its cathode layer and anode layer are exposed to a mixed gas comprised of a fuel gas and oxygen or an oxygen-containing gas.

According to a second aspect of the present invention, there is provided a fuel battery comprised of a container formed with supply and exhaust ports for a mixed fuel gas including methane or another fuel gas and oxygen and exhaust gas, wherein the portions other than the fuel battery cell in the container which form the spaces where the mixed fuel gas and exhaust gas flow are filled with a filler, gaps in the filler form gaps where ignition is not possible even in the presence of mixed fuel gas within an ignition limit inside the spaces when driving the battery, and the anode layer is comprised of a fired body having, as a main ingredient, NiO containing Li in solid solution.

Preferably, the anode layer has as its main ingredient a fired body obtained by adding an Li compound to a nickel oxide and firing the result. More preferably, the anode layer has as its main ingredient a fired body obtained by adding 1 mol% to 15 mol% of an Li compound to NiO converted to $Li_2O$ and firing the result. Preferably, the fuel battery contains as a sub ingredient comprising the anode layer not more than 50 vol% of at least one ingredient selected from the group of samarium oxide-doped cerium oxide, scandium oxide-stabilized zirconium oxide, and yttrium-stabilized zirconium oxide.

Particular embodiments in accordance with this invention will now be described with reference to the accompanying drawings; in which:-

FIG. 1 is a vertical sectional view for explaining an example of a fuel battery according to the present invention;
FIG. 2 is a vertical sectional view for explaining another example of a fuel battery according to the present invention;
FIG. 3 is a vertical sectional view for explaining still another example of a fuel battery according to the present invention;
FIG. 4 is a schematic view for explaining a fuel battery of the related art; and
FIG. 5 is a schematic view for explaining an improved fuel battery of the related art.

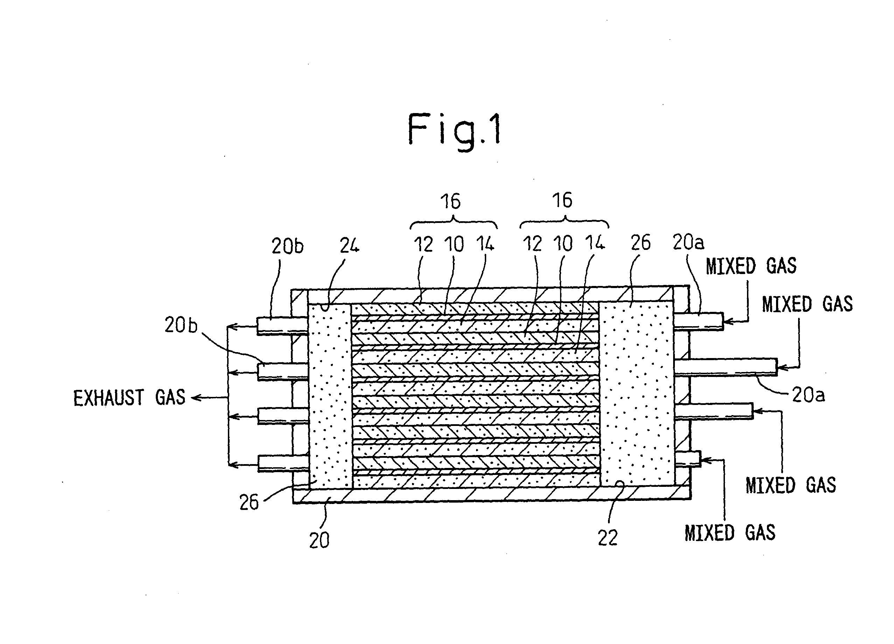

Preferred embodiments of the present invention will be described in detail below while referring to the attached figures. FIG. 1 shows an example of a single chamber fuel battery. In the fuel battery shown in FIG. 1, a multilayer fuel battery cell comprised of a plurality of single fuel battery cells 16, 16... stacked together is housed inside a container 20 of a rectangular or circular horizontal sectional shape formed by a plurality of supply pipes 20a, 20a... to which a mixed fuel gas containing methane or another fuel gas and oxygen is supplied (hereinafter sometimes called a "mixed gas") and a plurality of exhaust pipes 20b, 20b from which exhaust gas is exhausted so that the stacking surfaces of the battery cells 16 are perpendicular to the diametrical direction of the container.

The container 20 is formed by a ceramic or other heat resistant material having heat resistance up to 1200°C or so so as to exhibit sufficient heat resistance at the working temperature of the fuel battery. Each of the single fuel battery cells 16, 16... forming the multilayer fuel battery cell is formed from a porous cathode layer 12 formed on one surface of a compact structure solid electrolyte layer 10 and a porous anode layer 14 formed on the other surface of this solid electrolyte layer 10.

The anode layer 14 of one single fuel battery cell 16 and the cathode layer 12 of another single fuel battery cell 16 are directly joined to form a multilayer fuel battery cell. The power generated by this multilayer fuel battery cell is taken out by lead lines (not shown) led out from the cathode layer 12 of the single fuel battery cell 16 positioned at one of the outermost layers of the multilayer fuel battery cell and anode layer 14 of the single fuel battery cell 16 positioned at another of the outermost layers.

The solid electrolyte layer 10 forming the single fuel battery cell shown in FIG. 1 is formed by an oxygen ion derivative such as zirconium oxide partially stabilized by yttrium (Y), scandium (Sc), or another element of Group III of the Periodic Table or cerium oxide doped by samarium (Sm), gadolinium (Gd), etc. Further, the cathode layer 12 is formed from a manganese, gadolinium, or cobalt oxide compound to which strontium (Sr) or another element of Group III of the Periodic Table is added.

The anode layer 14 can be comprised of a fired body comprised of an ingredient obtained by adding an Li compound to nickel oxide and firing it as a main ingredient. Specifically, the anode layer suitably has as its main ingredient a fired body obtained by adding an Li compound in an amount of 1 mol% to 15 mol% converted to $Li_2O$ and firing the result. Further, as a sub ingredient forming the anode layer 14, it is possible to include any of samarium oxide-doped cerium oxide, scandium oxide-stabilized zirconium oxide, and yttrium-stabilized zirconium oxide in an amount of not more than 5 vol%.

The cathode layer 12 and anode layer 14 are preferably porous layers having open porosities of at least 20%, preferably 30 to 70%, particularly preferably 40 to 50%. The multilayer fuel battery cell shown in FIG. 1 can be obtained by stacking green sheets of predetermined shapes for the different layers on a prefired solid electrolyte layer 10, then coating paste for stacking use to a predetermined shape, then refiring. Further, the multilayer fuel battery cell can also be obtained by stacking and joining prefired single fuel battery cells 16, 16...

The cathode layer 12 and anode layer 14 for the multilayer fuel battery cell used in the fuel battery shown in FIG. 1 are porous layers, so mixed gas supplied from the supply pipes 20a, 20a... can be passed. Therefore, in the fuel battery shown in FIG. 1, the cathode layer 12 and anode layer 14 forming the single fuel battery cell 16 are housed in the container 20 so as to be parallel with the direction of flow of the mixed gas supplied from the supply pipes 20a, 20a...

At this time, substantially the entire outer circumference of the fuel battery cell is made close to the inner circumference of the container 20so so that the mixed gas supplied into the container 20 flows through the cathode layer 12 and anode layer 14 of the multilayer fuel battery cell so as to prevent the mixed gas supplied into the container 20 flowing out between the inner wall of the container 20 and the outer circumference of the multilayer fuel battery cell. Further, the gap between the inner wall of the container 20 and the outer circumference of the multilayer fuel battery cell may be sealed using for example alumina cement, high melting point glass, or another low porosity material.

Spaces 22 and 24 are formed between the multilayer fuel battery cell and supply pipes 20a, 20a... housed in the container 20 and between the multilayer fuel battery cell and exhaust pipes 20b, 20b... If these spaces 22 and 24 are empty, to prevent ignition of the mixed gas under a high temperature of about 1000°C constituting the drive temperature of the fuel battery, it is necessary to make the concentration of oxygen in the mixed gas lower than the ignition limit (methane or other fuel gas made higher concentration than ignition limit). When using a mixed gas with a low concentration of oxygen as the mixed gas to be supplied to the multilayer fuel battery cell, sometimes the methane or other fuel gas in the mixed gas will carburize and the battery performance will drop. On the other hand, if the concentration of oxygen in the mixed gas is made a concentration where the fuel gas will never carburize, the composition of the mixed gas in the space 22 will enter the ignition limit and the hazard of explosion will become remarkably higher.

In this regard, in the fuel battery shown in FIG. 1, the spaces 22 and 24 are filled with a filler 26. The gaps between parts of the filler 26, 26 are made distances where ignition cannot occur even in the presence of a mixed gas with an oxygen concentration (fuel gas concentration) within the ignition limit when driving the fuel battery. Specifically, filler is filled so that the gaps between parts of the filler 26, 26 become narrower than the extinguishing distance of mixed gas in the ignition limit present in the spaces 22 and 24.

Therefore, even if raising the concentration of oxygen in the mixed gas supplied to the container to within the ignition limit where the methane or other fuel gas will ignite, the ignition at the spaces 22 and 24 can be avoided. The "extinguishing distance of mixed gas" spoken of here is defined in *Kagaku Binran (Oyo Kagaku Hen II) (Chemical Handbook (Applied Chemistry II))* , The Chemical Society of Japan, November 16, 1978, second printing, p. 407 and is the minimum distance between electrodes where the mixed gas might ignite. With a distance between electrodes narrower than this distance, ignition will not occur no matter how large the energy is made. This extinguishing distance changes depending on the concentration of oxygen in the mixed gas, pressure, etc., so when driving the fuel battery, it is preferable to find the extinguishing distance of mixed gas of the spaces 22 and 24 experimentally.

The filler gaps of the filler filled in the spaces 22 and 24 are not uniform and have a distribution. Therefore, the gaps between the parts of the filler 26 and 26 sometimes, on an average, are narrower than the extinguishing distance of mixed gas of the spaces 22 and 24 when driving the fuel battery, but the maximum gap becomes greater in some cases. In this case, when the mixed gas is ignited, this is liable to lead to explosion, so it is possible to prevent explosion even if the mixed gas is ignited by making the maximum gap between parts of the filler 26 less than the extinguishing diameter able to prevent explosion of the mixed fuel gas present in the spaces 22 and 24 when driving the fuel battery. Further, the "extinguishing diameter" means the diameter of the limit where a combustion wave cannot enter even if the mixed gas blown out from the container is ignited. The extinguishing diameter of the mixed gas of methane and oxygen is 0.1 to 3 mm.

As the filler 26 filling the spaces 22 and 24 of the fuel battery shown in FIG. 1, it is possible to use a powder, porous bodies, or capillary tubes comprised of metal or a ceramic stabilized under the drive conditions of the fuel battery. As the powder, porous bodies, or capillary tubes, a powder, porous bodies, or capillary tubes formed by an alloy of one or more elements selected from the group of Ti, Cr, Te, Co, Ni, Cu, Al, Mo, Rh, Pd, Ag, W, Pt, and Au or a powder, porous bodies, or capillary tubes formed by a ceramic including one or more elements selected from Mg, Al, Si, and Zr may be used.

Further, as the powder, a powder having a particle size of 50 to 1000 μm is preferable. As the porous body, a porous body having an open porosity of at least 50% is preferable. As the capillary tubes, capillary tubes having an inside diameter of 100 to 200 μm may be suitably used. Long capillary tubes may be filled in the spaces 22 and 24 in the direction of flow of the mixed gas, while short capillary tubes may be filled in the spaces 22 and 24 at random. Further, to prevent ignition at the supply pipes 20a, 20a... supplying the mixed gas to the fuel battery, the supply pipes 20a may also be filled with filler.

The fuel battery shown in FIG. 1 supplies mixed gas from a plurality of supply pipes 20a, 20a... In this way, due to the dispersion and supply of mixed gas, ignition of the mixed gas in the supply pipes 20a is prevented to a great extent. The mixed gas supplied to the space 22 of the container 20 passes through the gaps between the fillers 26, reaches the multilayer fuel battery cell, and flows through the porous cathode layer 12 and anode layer 14 in the direction of the space 24. At this time, the mixed gas disperses in the fine holes formed in the cathode layer 12 and anode layer 14 and reaches the surface of the solid electrolyte layer 10.

The methane or other flammable gas in the mixed gas reaching the surface of the solid electrolyte layer 10 and the oxygen ions passing through the solid electrolyte layer 10 electrochemically react to produce water ($H_2O$), carbon dioxide ($CO_2$), hydrogen ($H_2$), and carbon monoxide (CO). The oxygen ions emit electrons. The water ($H_2O$), carbon dioxide ($CO_2$), hydrogen ($H_2$), and carbon monoxide (CO) produced by this electrochemical reaction are exhausted from the space 24 from the exhaust pipes 20b, 20b...

As the mixed gas flows through the cathode layer 12 and anode layer 14 of the multilayer fuel battery cell, the amount of oxygen increases and the water ($H_2O$), carbon dioxide ($CO_2$), hydrogen ($H_2$), and carbon monoxide (CO) increase, but the composition in the mixed gas is substantially the same. Therefore, the space 24 which the exhaust gas would fill, like the space 22, also has to be filled with the filler 26 to make it explosion-proof. Further, as the mixed gas supplied to the fuel battery of FIG. 1, it is possible to suitably use a mixed gas comprised of, in addition to methane, hydrogen gas, ethane, propane, butane, or another flammable gas and air mixed together.

By the supply of the mixed gas within the ignition limit as explained above, the anode layer (fuel electrode) 14 is placed in an oxidizing atmosphere. It was confirmed that even if placed in an oxidizing atmosphere in this way, by using a fired body having NiO containing Li in solid solution as the main ingredient for the anode layer 14, the electrical conductivity of the anode layer 14 is maintained and the battery performance is maintained.

In the fuel battery shown in FIG. 1, the solid electrolyte layer 10 forming the multilayer fuel battery cell is a compact structure, so the multilayer fuel battery cell is housed in the container 20 so as to make the cathode layer 12 and anode layer 14 forming the single fuel battery cell 16 parallel to the direction of flow of the mixed gas supplied from the supply pipes 20a, 20a... and the porous cathode layer 12 and anode layer 14 are used as the flow path of the mixed gas. In the fuel battery shown in FIG. 1, sealing of the outer circumference of the multilayer fuel battery cell and the inner circumference of the container 20 tends to become difficult.

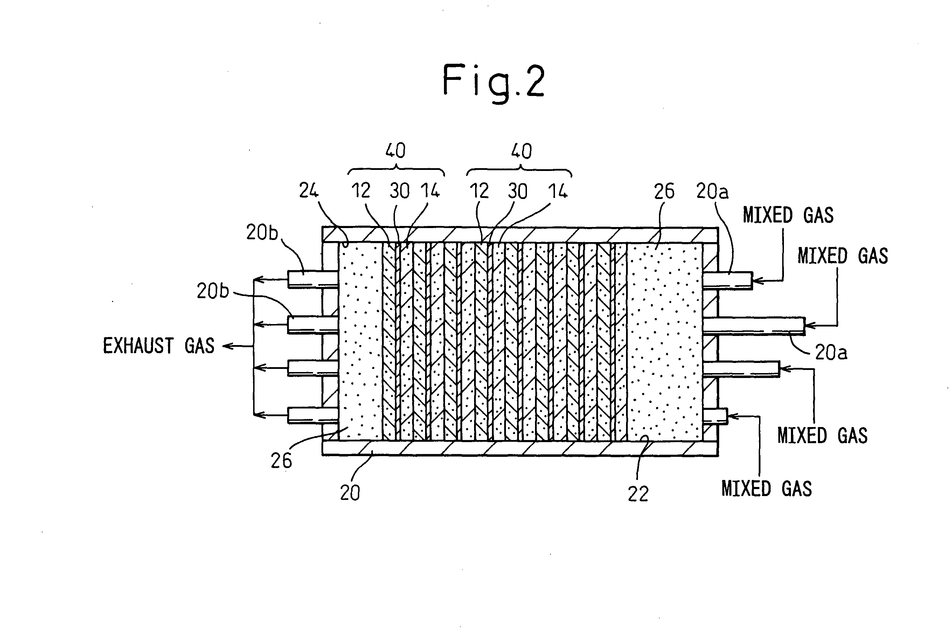

In this regard, as in the fuel battery shown in FIG. 2, by housing the multilayer fuel battery cell comprised of the plurality of single fuel battery cells 40, 40... stacked together in the container 20 so that the cathode layer 12 and anode layer 14 forming the single fuel battery cell 40 become perpendicular to the direction of flow of the mixed gas supplied from the supply pipes 20a, 20a..., it is possible to easily seal the outer circumference of the multilayer fuel battery cell and the inner circumference of the container 20. Since the mixed gas has to pass through the multilayer fuel battery cell, the single fuel battery cell 40 forming the multilayer fuel battery cell shown in FIG. 2 is formed by the porous layers of the cathode layer 12, anode layer 14, and solid electrolyte layer 30.

The multilayer fuel battery cell shown in FIG. 2 can be obtained by simultaneously firing a stacked body of layers of green sheets formed to predetermined shapes stacked together. Therefore, the multilayer fuel battery cell shown in FIG. 2 can be made more inexpensively than the multilayer fuel battery cell shown in FIG. 1 obtained by stacking green sheets of predetermined shapes for the different layers on a prefired solid electrolyte layer 10, then coating pastes for layers in predetermined shapes, then again firing. Here, members the same as the fuel battery shown in FIG. 1 among the members forming the fuel battery shown in FIG. 2 are assigned the same reference numerals as in FIG. 1 and detailed explanations are omitted. The mixed gas supplied from the supply pipes 20a, 20a... of the fuel battery shown in FIG. 2 flow through the inside of the porous cathode layer 12, anode layer 14, and solid electrolyte layer 30 while undergoing an electrochemical reaction and then is exhausted from the exhaust pipes 20b, 20b...

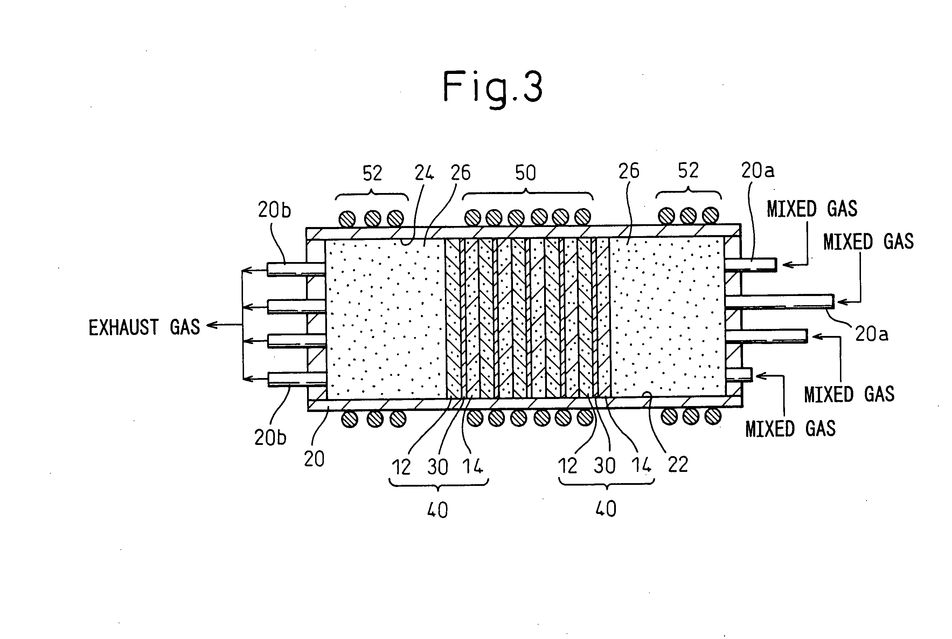

The fuel battery shown in FIG. 1 and FIG. 2 generates power by placing the fuel battery as a whole in an atmosphere of a predetermined temperature, but as shown in FIG. 3, it is also possible to provide a heater 50 as a heating means for heating the part at which the multilayer fuel battery cell is housed and provide cooling pipes 52 as a cooling means at the spaces 22 and 24 near the multilayer fuel battery cell and filled with the filler 26. By cooling the mixed gas in the spaces 22 and 24, the extinguishing diameter of the mixed gas in the spaces 22 and 24 can be made larger. When force cooling the spaces 22 and 24 in this way, it is preferable to make the filler 26 filling the spaces 22 and 24 a metal with a good heat conductivity. Further, among the members forming the fuel battery shown in FIG. 3, members the same as the fuel battery shown in FIG. 1 and FIG. 2 are assigned the same reference numerals and detailed explanations are omitted.

In the above, the explanation was given with reference to a single chamber fuel battery, but in the separated chamber fuel battery shown in FIG. 4 as well, by using the above materials for the anode layer, the electrical conductivity of the anode layer is maintained and the battery performance is maintained even with long term use.

EXAMPLES

Example 1

As shown in Table 1, NiO powder alone and mixed powders comprised of NiO powder plus $Li_2CO_3$ powder in amounts of 1, 3, 5, 8, 10, 15, and 20 mol% were prepared. The powders were shaped into cylinders of a diameter of 5 mm and a length of about 15 mm, then fired at 1200°C for 2 hours in the atmosphere to obtain black-colored Li-doped NiO fired bodies. The fired bodies contained Li in the above amounts in the form of $Li_2O$. The resistance values of the fired bodies were measured by the DC four-terminal method. The measurement values are shown in the first row of the rows showing the DC resistance in Table 1.

The anode has to be as low in resistance as possible in order to secure the function of efficiently gathering the electrons produced by the electrode reaction and supplying them to an external circuit. The resistance of a fired body of Li-Ni-O is affected by the solubility of Li, while the solubility of Li is affected by the oxygen partial pressure of the ambient atmosphere. In the fuel battery of the present invention, the oxygen partial pressure of the ambient atmosphere changes in various ways by the ratio of supply of the fuel gas and the oxygen or oxygen-containing gas. When the composition supplied is fuel-rich compared with the stoichiometric composition, the atmosphere becomes a reducing one with a low oxygen partial pressure, while when it is fuel-lean, the atmosphere becomes an oxidizing one with a high oxygen partial pressure.

The above fired bodies were exposed to oxidizing conditions to reducing conditions of extreme ambient atmospheres in which the fuel battery is envisioned as being actually used, then measured for electrical resistance by the DC four-terminal method. The exposure conditions and measurement results are shown in Table 1. Among the rows showing the DC resistance in Table 1, Row 2 and Row 4 show the resistance value after a fired body is exposed at 500°C in a stream of nitrogen for 5 hours (Row 2), the resistance value after it is exposed at 500°C in a stream of nitrogen including 4 vol% of hydrogen for 10 minutes (Row 3), and the resistance value after it is exposed in the atmosphere again at 1200°C for 2 hours (Row 4).

when exposed for 10 minutes in a stream of nitrogen gas including 4 vol% of hydrogen at 500°C (Row 3), cracks occur along with the shrinkage of the sample. This tendency increased along with the increase of the amount of $Li_2CO_3$ added. Under these conditions, the electrical resistance declined in all samples, but if exposed again in the atmosphere at 1200°C for 2 hours, the zero Li addition sample increased remarkably in electrical resistance, while the other samples to which at least 1 mol% of Li was added did not notably increase in electrical resistance and remained stable. In this way, it is important that the conductivity of the anode be stably maintained during operation of the fuel battery. Further, it is simultaneously required that no remarkable cracks occur along with shrinkage.

From the above viewpoint, it is desirable to make the amount of Li added the minimum value of at least 1 mol% where the effect is clearly expressed and not more than the maximum value of 15 mol% where destruction does not occur. Further, from the viewpoint of making the resistance in the fired state as it is and under various exposure conditions as small as possible, it is more desirable that the amount of Li added be within the range of 3 to 15 mol%, most preferably in the range of 8 to 10 mol%.

Table 1

| Amount of Li$_2$CO$_3$ added (mol%) | DC resistance ($\Omega$cm) | | | |
|---|---|---|---|---|
| | Firing at 1200°C for 2 hours in atmosphere | + treatment at 500°C for 5 hours in nitrogen | + treatment at 500°C for 10 minutes in 4% hydrogen-nitrogen | + treatment at 1200°C for 2 hours in atmosphere |
| 0 | 2 x 10$^6$ or more | 2 x 10$^6$ or more | 2.7 x 10$^{-5}$ | 2 x 10$^6$ or more |
| 1 | 1.456 | 4.228 | 242 x 10$^{-5}$ | 1300 |
| 3 | 0.383 | 0.385 | 3.19 x 10$^{-5}$ | 295 |
| 5 | 0.332 | 0.331 | 2.77 x 10$^{-5}$ | 338 |
| 8 | 0.123 | 0.117 | 1.51 x 10$^{-5}$ | 46 |
| 10 | 0.106 | 0.082 | 23.5 x 10$^{-5}$ | 43 |
| 15 | 0.340 | 0.241 | 22.6 x 10$^{-5}$ | 500 |
| 20 | 0.252 | 0.165 | (destroyed) | - |

Example 2

8 mol% of Li$_2$CO$_3$ powder was added to NiO powder and the mixture fired at 1200°C for 2 hours in the atmosphere. The result was then crushed to obtain a powder. 10 wt% of SDC (samaria-doped ceria) powder, a binder, and terpineol were added to this powder to prepare a paste. This was printed on one surface of an SDC substrate having a relative density of about 90% printed with an LSM (lanthane strontium manganite) paste on the other surface and the result fired at 1200°C for 2 hours in the atmosphere (sample 1). In the same way, 10 wt% of SDC-added NiO paste was printed on one surface of an SDC substrate having a relative density of about 90% printed with an LSM paste on the other surface and the result fired at 1200°C for 2 hours in the atmosphere, then the NiO was reduced in nitrogen containing about 4 vol% of hydrogen (sample 2).

Platinum wires welded to platinum meshes were used as leadout lines. These were placed in tubes filled with an alumina-based ceramic porous body. The results were held at 500°C in a stream of a mixed gas of butane and air in the sintering range. As a result, with sample 1, generation of current of 33 mA by 110 mV was confirmed, while with sample 2, slight generation of current was confirmed at the start, but then none was generated any longer. After the temperature went down, the samples were taken out and checked. As a result, the anode of sample 2 changed from the metallic gray color to a yellow-green color after the reduction and easily peeled off from the SDC substrate.

Summarizing the effects of the invention, according to the present invention, it is possible to provide a fuel battery maintained in electroconductivity and maintained in fuel electrode functions even if the oxygen partial pressure at the fuel electrode (anode layer) side becomes higher and the electrode metal is oxidized.

**Claims**

1. A fuel battery having a cell comprised of an oxygen ion conducting solid electrolyte layer on one surface of which a cathode layer is formed and on the other surface of which an anode layer is formed, supplied with methane gas or another fuel gas and oxygen or an oxygen-containing gas, and causing an oxidation reduction reaction between said gases through said cell so as to generate electromotive power, wherein
said anode layer is comprised of a sintered body having, as a main ingredient, NiO containing Li in solid solution.

2. A fuel battery as set forth in claim 1, forming a separated type divided into a fuel gas supply side chamber and an oxygen or oxygen-containing gas supply side chamber by said cell.

3. A fuel battery as set forth in claim 1, having a chamber in which a cell is arranged so that its cathode layer and anode layer are exposed to a mixed gas comprised of a fuel gas and oxygen or an oxygen-containing gas.

4. A fuel battery comprised of a container formed with supply and exhaust ports for a mixed fuel gas including methane or another fuel gas and oxygen and exhaust gas, wherein
the portions other than the fuel battery cell in said container which form the spaces where the mixed fuel gas and exhaust gas flow are filled with a filler,

gaps in said filler form gaps where ignition is not possible even in the presence of mixed fuel gas within an ignition limit inside said spaces when driving the battery, and

said anode layer is comprised of a fired body having, as a main ingredient, NiO containing Li in solid solution.

5. A fuel battery as set forth in claim 1, 2, 3, or 4, wherein said anode layer has as its main ingredient a fired body obtained by adding an Li compound to a nickel oxide and firing the result.

6. A fuel battery as set fourth in claim 5, wherein said anode layer has as its main ingredient a fired body obtained by adding 1 mol% to 15 mol% of an Li compound to NiO converted to $Li_2O$ and firing the result.

7. A fuel battery as set fourth in any preceding claim, containing a sub ingredient comprising said anode layer not more than 50 vol% of at least one ingredient selected from the group of samarium oxide-doped cerium oxide, scandium oxide-stabilized zirconium oxide, and yttrium-stabilized zirconium oxide.

8. A fuel battery as set forth in any preceding claim, wherein said anode layer is a porous layer having open porosities of 30 to 70%.

EP 1 403 956 A2

# Fig.1

# Fig.2

MIXED GAS

MIXED GAS

EXHAUST GAS

MIXED GAS

MIXED GAS

EP 1 403 956 A2

Fig.3

# Fig.4
## PRIOR ART

# Fig.5
## PRIOR ART

MIXED GAS

200a          200

102 ⎫
100 ⎬ 108
104 ⎭

200b

EXHAUST GAS